# EUROPEAN PATENT SPECIFICATION

(11) **EP 4 011 716 B1**
(45) Date of publication and mention of the grant of the patent: **07.08.2024**
(21) Application number: 21213509.9
(22) Date of filing: 09.12.2021
(51) Int. Cl.: B60S 3/04, B60S 13/02, B60S 3/00

(54) **ROTARY VEHICLE INTERIOR CLEANING INSTALLATION AND METHOD**
ROTIERBARE FAHRZEUGINNENREINIGUNGSANLAGE UND VERFAHREN
INSTALLATION ROTATIVE DE NETTOYAGE DE L'INTÉRIEUR DE VÉHICULES ET PROCÉDÉ

(30) Priority: 09.12.2020 NL 2027078
(43) Date of publication of application: 15.06.2022
(73) Proprietor: TRAP Vastgoed B.V., 6541 CZ Nijmegen (NL)
(72) Inventor: Peters, Alexander Maria Peter Alphonsus, NIJMEGEN (NL)
(74) Representative: Arnold & Siedsma

(56) References cited:
- WO-A2-2016/162650
- US-A- 1 934 494
- US-A- 2 049 025
- US-A- 4 867 798
- US-A- 5 300 341
- US-A1- 2003 164 183
- US-B1- 10 576 942

## Description

Vehicle interior cleaning installations, for example for cars, are known from practice and comprise a building with an entry side and an exit side that is opposite to the entry side. Between the entry side and the exit side a vehicle interior cleaning lane is provided. A vehicle is movable along the lane using one or more tracks, such as a conveyor belt, on which (the wheels of) the vehicle are positioned. During the transport, the vehicle passes several cleaning stations that are used to clean the interior and/or the exterior of the vehicle. In case of interior cleaning, the cleaning is often performed by employees that operate the cleaning stations along the lane.

US 1 934 494 relates to a system for cleaning and polishing automobiles and has to do more particularly with method and apparatus for the cleaning and polishing of any number of automobiles successively. To that end, US 1 934 494 discloses an enclosure through which the automobiles may pass one by one successively by means of a continuously-moving conveyor, and with which there is associated apparatus arranged in succession along the conveyor for mechanically applying varied treat-, ments to the automobile whereby it emerges from the enclosure thoroughly cleaned and polished both exteriorly and interiorly.

A disadvantage of the known cleaning installations is that they have a (very) large footprint with regard to the floor surface required. This is especially true for interior cleaning, because employees need to reach into the vehicle, therewith requiring space to also open the doors of the vehicle during cleaning. This results in high initial costs to build the installations as well as high operation costs.

The application is aimed at obviating or at least significantly reducing the abovementioned disadvantages.

To that end, the application provides a rotary vehicle interior cleaning installation comprising:
- a vehicle support platform that is rotatable around a central platform axis and is configured to support a number of vehicles on a vehicle surface of the vehicle support platform;
- a drive assembly that is operatively connected to the vehicle support platform and that is configured to rotate the vehicle support platform; and
- a number of cleaning devices that is positioned at a working distance from the vehicle surface of the vehicle support platform.

It is noted that the rotary vehicle interior cleaning installation according to the invention is directed explicitly to interior cleaning of vehicles. The rotary vehicle interior cleaning installation according to the invention is therefore in this application also sometimes referred to as rotary vehicle interior cleaning installation, rotary interior cleaning installation, or, in short, vehicle interior cleaning installation. These terms are used interchangeably throughout the application and are considered to be synonyms. It is further noted that there is a distinct difference between interior cleaning and exterior cleaning, with interior cleaning being more complex with regard to installation requirements. This is for example due to the fact that the operators/workers and/or the cleaning devices/ cleaning installations need to reach (at least partially) into vehicles to be cleaned.

The working distance as mentioned in the application encompasses that the cleaning devices are capable of reaching into vehicles in order to be able to operate the vehicle interior cleaning installation according to the invention. This may for example encompass cleaning devices that are placed on the vehicle surface and have (retractable) parts that can be positioned at the working distance of the vehicle support platform, such as flexible vacuum hoses. It also encompasses cleaning devices that have a support that positions the cleaning devices above the vehicle support platform or even cleaning devices that are suspended above the vehicle support platform. In any case, the cleaning devices need to be capable to reach at least partially into the vehicle interior.

It is furthermore noted that the rotary vehicle interior cleaning installation according to the invention is meant for simultaneous cleaning of multiple vehicles. This already follows from the fact that the problem mentioned before relates to the cleaning of multiple vehicles.

An advantage of the cleaning installation according to the invention is that, due to the rotatable vehicle support platform, the (spatial) footprint of the installation can be minimized. This compact construction reduces investment costs of the installation and simultaneously reduces complexity of the installation. The latter advantage is mostly achieved by the fact that the cleaning devices can be positioned near a center of the vehicle support platform, which means the supply means for the various cleaning devices, such as electricity, compressed air and/or water supply can all be positioned near to each other. In addition, this allows the cleaning devices which are needed to reach into the interior of the vehicles to be positioned in a favourable position, which preferably is in the vicinity of the vehicle.

Another advantage of the cleaning installation according to the invention is that a vehicle can enter and exit the cleaning installation at substantially the same location. This first of all obviates the need for the consumer to move alongside his or her vehicle along the entire cleaning installation. Instead, a consumer or user can simply position himself near a center of the vehicle platform and observe his or her vehicle rotate along the number of cleaning devices and subsequently enter the vehicle at substantially the same location at which the consumer exited the vehicle. As a result, even disabled persons may use the cleaning installation according to the invention.

Another advantage of the cleaning installation according to the invention is that the vehicle capacity of the cleaning installation can be varied during operation, especially in case the vehicle support platform is circular or semi-circular. In this case, the vehicles can be positioned either with a longitudinal axis substantially in the rotation direction (i.e. nose directed towards moving direction) or with the longitudinal axis (i.e. the nose of the vehicle) towards the central axis of the vehicle support platform. Although the latter option provides less space for the cleaning operations to take place, it does significantly increase the vehicle capacity of the cleaning installation. Such a variable cleaning capacity is not possible in the prior art, since the vehicles are required to be positioned with a longitudinal axis in the movement direction (i.e. in a nose-tail configuration).

Another advantage of the cleaning installation according to the invention is that it provides more flexibility with regard to the design of the floor plan. This allows different lay-outs of the floor plan, which are for example tailored to a specific location or specific characteristics of the area in which the cleaning installation according to the invention is built.

It is noted that the vehicle interior cleaning installation according to the invention is preferably used for interior cleaning of vehicles as vehicle interior cleaning installation. It is further noted that the rotary vehicle interior cleaning installation according to the invention comprises rotating parts, yet does not necessarily mean that the entire vehicle interior cleaning installation should be rotatable or rotating. As such, the rotary vehicle interior cleaning installation according to the invention could also be read as vehicle interior cleaning installation according to the invention (comprising rotatable parts as described in the claims).

In an embodiment according to the invention, the vehicle support platform comprises a central part or area that, when viewed from the central platform axis, is defined by a first radius, and comprises a peripheral area that, when viewed from the central platform axis, has a second radius, wherein the peripheral area is concentric with the central part or central area and extends around said central area, and wherein the cleaning devices are preferably positioned at, directly adjacent or above the junction between the central area and the peripheral area.

An advantage of having two separate areas is that a specific distinction can be made between a work area and another area. The cleaning devices are preferably positioned at or near the (inner) edge of the work area, which preferably is the peripheral area.

According to the invention, the vehicles are, during use, positioned near an outer part of the vehicle support platform, whereas a central area of the vehicle support platform is configured to accommodate people, such as vehicle owners whose vehicle is cleaned at that time.

An advantage of providing a central area for people, while positioning the vehicles at or near an outer part of the vehicle support platform is that vehicle owners or drivers can substantially wait for their vehicle to be cleaned without having to move alongside their vehicle.

Another advantage is that the safety of the owners and/or users is increased due to the fact that they are all positioned near a central area of the installation. As a result, no owners and/or users are present at the positions at which the cars are cleaned.

In an embodiment according to the invention, the vehicle support platform extends over, or preferably under a slight angle with a ground surface, wherein the ground surface comprises a flat or funnel-shaped indentation in which the vehicle support platform is positioned.

An advantage of positioning the vehicle support platform in a flat or funnel-shaped indentation in the ground is that the vehicle surface of the vehicle support platform is substantially level with ground level around the vehicle support platform. This allows vehicles to easily enter onto (and move off) the vehicle support platform substantially without bumps. In addition, the funnel-shaped indentation may provide space for support structures, discharge ducts etcetera. It also allows for an even more easy collection of garbage, dust and/or waste (particles).

The vehicle support platform preferably has a slight angle with the ground surface in that has a slightly tilted vehicle surface to allow (waste) fluids to flow from the vehicle support platform to a waste fluid discharge. In order to achieve effective removal, the vehicle surface tilts downwardly from the central axis in a radially outward direction.

In an embodiment according to the invention, the vehicle support platform, when viewed in a direction parallel to the central platform axis, extends over a predetermined height, and wherein the vehicle support platform further comprises a cut-out section at the circumferential edge that extends from the base surface over a predetermined distance towards the vehicle surface, wherein the distance is less than the height of the vehicle support platform.

The cut-out section has the effect that the vehicle surface has a larger radius than the base surface of the vehicle support platform such that the vehicle surface extends over an edge of the indentation in which the vehicle support platform is positioned. An advantage thereof is that the gap between the (lower part of the) vehicle support platform and the edge of the indentation is covered by the vehicle surface, which prevents users and/or personnel to get caught in the gap. Therewith, an even safer cleaning installation is achieved.

In an embodiment according to the invention, the cleaning installation comprises a support assembly that is configured to, preferably rotatably, support the vehicle support platform with respect to a ground surface.

An advantage of providing a support is assembly that the vehicle support platform has an even further increased stability. This for example increases the load capacity of the vehicle support platform and therewith the capacity of the cleaning installation as such. The support assembly may be provided using various different constructional options, some of which have advantages over others.

In an embodiment according to the invention, the support assembly comprises at least one support set including a plurality of grounds supports that are positioned between a base surface that is positioned opposite the vehicle surface and the ground surface.

An advantage of providing ground supports between the ground surface and the vehicle support platform is that a sturdy, reliable and durable ground support is achieved. The ground supports may be embodied in different forms and/or shapes that provide support and allow the vehicle support platform to rotate around its central platform axis. The ground supports may be positioned on or partially in the ground surface. Additionally or alternatively, the ground supports can be positioned on and/or even at least partially in the base surface of the vehicle support platform.

In an embodiment according to the invention, the plurality of ground supports is positioned in a ring having a ring radius with a central axis that coincides with the central platform axis.

An advantage of providing the ground supports in a ring is that an even and stable vehicle (support) surface is formed on which the platform rests. This is especially relevant, since the pressure exerted on the vehicle support platform may be uneven over the platform surface during use. This for example depends on the load, in the form of number of cars, on the platform, which may lead to uneven weight distribution. By providing the ground supports in a ring, such uneven loads can be easily balanced.

In an embodiment according to the invention, the ring radius is in the range of 10% - 99,98% of a platform radius, and wherein the ring radius preferably is in the range of 50% - 75% of the platform radius.

The ring of ground supports may in principle be provided anywhere underneath the vehicle support platform. It has however been found that providing the ground supports underneath the vehicle support platform at a position in the range of 10% - 98% of the platform radius provides good support and additionally further improves the stability and load bearing capacity of the vehicle support platform.

In an embodiment according to the invention, the support assembly comprises a first support set and a second support set, wherein the plurality of ground supports of the first support set is positioned in a first ring having a first ring radius and wherein the plurality of ground supports of the second support set is positioned in a second ring having a second ring radius.

An advantage of providing two supports sets in two separate rings is that the load of the vehicle support platform is equalized even further, leading to an even more stable vehicle support platform. In addition, the increased load distribution reduces wear on the components of the support sets and thus increase life-time of the installation as a whole.

In an embodiment according to the invention, the first ring radius preferably is in the range of 80% - 99% of the vehicle platform diameter and the second ring radius preferably is in the range of 25% - 45% of the vehicle platform diameter.

An advantage of the abovementioned ranges is that the load is distributed in a highly effective way. It is preferred that the range is chosen such that the ground supports are positioned on the sides of a vehicle lane on the platform. Such a vehicle lane is the lane or position on the vehicle support platform in or at which the vehicles are parked during treatment. In most cases this lane or position will, when viewed in a radially outward direction, be positioned radially outwardly from the central axis. In a preferred configuration, the first ring radius will be around 95% of the vehicle platform diameter in order to support an outer circumference of the vehicle support platform, whereas the second ring will be around be positioned at around 35% of the vehicle platform diameter in order to provide stability nearer to the center of the platform.

In an embodiment according to the invention, a vehicle platform diameter is in the range of 5 meter - 35 meter, more preferably is in the range of 10 meter - 30 meter, and most preferably is in the range of 20 meter.

It has been found that a diameter of 20 meter provides sufficient space for treating vehicles, especially cars and vans, without increasing the cost by creating unnecessary space. In this particular embodiment, when provided with two rings of ground supports, the rings are positioned at a radius of approximately 3,5 meter (second ring) and 9,5 meter (first ring) from the central axis. It is noted that other sizes of the vehicle platform, for example for larger vehicles, may be possible as well.

In an embodiment according to the invention, the ground supports comprise rollers that are spatially separated along the circumference of the ring and that are fixated with respect to each other by a distance holder that extends around substantially the entire ring.

An advantage of rollers, which are sometimes also referred to as solid wheels, is that rollers provide a robust, strong and wear-resistant ground support. Another advantage is that rollers are cost-effective and low-maintenance. In an embodiment, the rollers may comprise a cylindrical main body having a central opening that extends along a longitudinal axis of the cylindrical body. Optionally, on each outer ends of the main body may be provided with a flange that extends perpendicular to the longitudinal axis and which has a radius that exceeds the radius of the cylindrical main body.

Another advantage is that support rollers are substantially insensitive to weather conditions, and, for example in case of stainless steel rollers, also substantially insensitive to water and/or pollutions and/or contaminants, including dust, dirt and/or cleaning substances.

An even further advantage of the support rollers is that it is easy to determine the amount of wear of the rollers and to maintain the rollers.

An advantage of the distance holder is that it prevents the rollers from moving with respect to neighbouring rollers, thus reducing the risk of 'collusion' or the rollers on a particular position underneath the vehicle support platform. The distance holder is designed to keep the rollers at a predetermined, preferably equidistant, distance from each other. It is noted that the distance holder also comprise a number or a plurality of distance holder, with each distance holder spanning a part of the circumference of the ring, such as for example a distance between two adjacent rollers. In other words, a single distance holder may in this respect be used to connect to adjacent distance holders and a number of distance holders together cover the entire circumference of the ring.

In an embodiment according to the invention, wherein the rollers preferably are manufactured from metal, such as stainless steel or aluminium, plastic, such as wear-resistant plastic, or a combination thereof.

An advantage of the abovementioned materials is that they are relatively cheap and robust. Another advantage is that rollers manufactured of the abovementioned materials are capable of bearing a high load, such as the vehicle support platform, without experiencing a high wear.

In an embodiment according to the invention, the rollers may be provided on a guide rail that is positioned on or at partially in the ground surface.

An advantage thereof is that the rollers are held in place by the guide rail and the risk of radial movement of the vehicle support platform with respect to the ground surface is even further reduced.

Another advantage is that the wear on the rollers is further reduced due to the reduced amount of friction between the guide rail and the rollers (compared to for example the resistance of the rollers against the base surface and/or the ground surface).

In an embodiment according to the invention, the support assembly comprises a platform guide rail that is connected to the base surface, and a ground guide rail that is connected to the ground surface, wherein the rollers are positioned between the platform guide rail and the ground guide rail and are in rolling contact with both the platform guide rail and the ground guide rail, such that the platform is rotatable along the circumferential direction of the ring, and wherein the rollers preferably are designed such that radial movement of the rollers is substantially obviated.

An advantage of this embodiment is that the rollers can be positioned between the two guide rails and are (rollably) enclosed by the guide rails while simultaneously obviating the risk of derailing of the platform. It is noted that one or both of the guide rails may be connected to the respective surfaces by means of an intermediate support part or connector.

Another advantage of the embodiment is that it allows the vehicle support platform to be positioned at a distance from the ground surface that exceeds a roller diameter. In other words, it allows the vehicle support platform to be positioned such that a hollow space is formed between the vehicle support platform and the ground surface. This hollow space may for example be used for drainage and/or positioning of utility connections.

In an embodiment according to the invention, the platform guide rail and the ground guide rail are shaped in the form of a T-beam or an I-beam and the rollers are cylindrical and extend along a cylinder axis from a first end to a second end, wherein both the first and the second end are provided with a flange that extends perpendicular to the cylinder axis and that has a diameter that is larger than a diameter of the cylinder.

This embodiment provides flange-formed wheels that can be positioned between the lower (horizontal part of) the platform guide rail and the upper (horizontal part of) the ground guide rail and that obviate movement of the roller in a radial direction of the vehicle support platform. Simultaneously, the construction allows rolling movement along the guide rail in the circumferential direction without obstruction. As a result, the risk of derailing the platform is obviated.

Another advantage is that the construction is safe, reliable and substantially maintenance-free.

In an embodiment according to the invention, each of the plurality of grounds supports comprises a platform roller that is connected to the base surface of the vehicle support platform, and a ground roller that is connected to the ground surface, wherein the platform roller is, when viewed in a vertical direction, is positioned directly above the associated ground roller and is operatively connected to the associated ground roller, and wherein the support assembly further comprises a guide rail that is positioned between the platform rollers and the ground surface rollers along which the rollers are rollable in the circumferential direction of the ring, and wherein the rollers preferably are designed such that radial movement of the rollers is substantially obviated.

In an alternative embodiment compared to the previously mentioned embodiment, it is also possible to provide rollers on both sides of a single guide rail. An advantage of this embodiment is that it (also) provides wheels that can be positioned between on (in case of platform rollers) the guide rail and against (in case of ground rollers) a lower end of the guide rail. As a result, the wear on the individual rollers is, due to the cooperation between the ground and platform rollers, further reduced.

Another advantage is that, due to having platform rollers and ground rollers, a more redundant construction is achieved. Even if one of the platform rollers or the ground rollers get locked or otherwise unable to rotate, the vehicle support platform is able to be rotated on the other of the platform rollers or the ground rollers.

Another advantage is that the construction is safe, reliable and substantially maintenance-free.

In an embodiment of the invention, the guide rail is shaped as an I-beam and the rollers are cylindrical and extend along a cylinder axis from a first end to a second end, wherein both the first and the second end are provided with a flange that extends perpendicular to the cylinder axis and that has a diameter that is larger than a diameter of the cylinder.

This provides flange-formed wheels that can be positioned over (in case of platform rollers) or under (in case of ground rollers) the (horizontal parts of) the I-beam. This provides a roller that is obviated from moving in the radial direction of the vehicle support platform, while allowing rolling movement along the guide rail in the circumferential direction. As a result, the risk of derailing of the vehicle support platform is (even further) obviated.

Another advantage is that the construction is safe, reliable and substantially maintenance-free.

In an embodiment according to the invention, wherein the rollers preferably are manufactured from metal, such as stainless steel or aluminium, plastic, such as wear-resistant plastic, or a combination thereof.

An advantage of the abovementioned materials is that they are relatively cheap and robust. Another advantage is that rollers manufactured of the abovementioned materials are capable of bearing a high load, such as the vehicle support platform, without experiencing a high wear.

In an embodiment according to the invention, the ground rollers are spatially separated along the circumference of the ring and are fixated with respect to each other by a first distance holder and wherein the support rollers are spatially separated along the circumference of the ring and are fixated with respect to each other by a second distance holder.

An advantage of the first and second distance holders is that it prevents the rollers from moving with respect to neighbouring rollers, thus reducing the risk of 'collusion' or the rollers on a particular position underneath the vehicle support platform. The distance holder is designed to keep the rollers at a predetermined, preferably equidistant, distance from each other.

In an embodiment according to the invention, the plurality of ground supports comprises magnetic platform supports that are connected to the base surface of the vehicle support platform, and magnetic ground supports that are connected to the ground surface, wherein the magnetic platform supports are, when viewed in a vertical direction, positioned above the magnetic ground supports, such that the magnetic supports provide a support force.

In this embodiment, magnetic supports may be used to suspend and/or support the vehicle support platform. An advantage of magnetic supports is that a robust and substantially maintenance free ground support is achieved, because magnets do not require maintenance.

Another advantage of magnetic supports is that magnetic supports are substantially insensitive to pollution, dirt, grease and other contaminants that may be forthcoming from the cleaning of vehicles on the vehicle support platform.

It is preferred that the magnetic supports are provided on both the base surface of the vehicle support platform and the ground surface. It is however noted that magnetic supports may also be provided on only one of the base surface and the ground surface, in which case the other of the base surface and the ground surface is provided with a magnetisable material, preferably a ring of magnetisable material, for example a metal.

In an embodiment according to the invention, the ring shape of the magnetic supports has a ring radius with a central axis that coincides with the central platform axis, wherein the ring radius is in the range of 10% - 98% of a platform radius, and wherein the ring radius preferably is in the range of 50% - 75% of the platform radius.

The ring of magnetic supports may in principle be provided anywhere underneath the vehicle support platform. It has however been found that providing the magnetic supports underneath the vehicle support platform at a position in the range of 10% - 98% of the platform radius provides good support and additionally further improves the stability and load bearing capacity of the vehicle support platform.

It is noted that in the cleaning installation according to the invention it is also possible to provide the magnetic supports in multiple rings, such as for example a ring of magnetic supports at 35% or 45% of the platform radius and a ring of magnetic supports at a more outwardly position, such as for example 75%, 80% or 98% of the platform radius.

In an embodiment according to the invention, the ground support assembly comprises a central support shaft that is connected to the platform support vehicle and that extends substantially coincidental with the central platform axis.

In an alternative or additional option the ground support assembly is provided as a central support shaft. An advantage is that this construction provides a simple and reliable support option for the vehicle support platform.

Another advantage is that it allows a modular build-up from the cleaning installation, because it allows the vehicle support platform to be modularly (and easily) exchangeable in case of wear and/or damage.

Another advantage of this construction is that, due to the position of the central axis, pollution, dirt, grease and other contaminants can not easily reach the ground support. This provides a substantially maintenance free ground support.

It is noted that the ground support may also comprise a combination of one or more of a magnetic support, a central support shaft and/or a plurality of rollers as described above and/or may comprise multiple rings of similar support options, such as multiple rings of magnetic supports and/or support rollers.

In an embodiment according to the invention, the drive assembly comprises a plurality of drive units that are positioned adjacent and in direct contact with an outer circumferential edge of the vehicle support platform, wherein the drive units are preferably rollers, gears or wheels driven by one or more motors.

An advantage of providing a plurality of drive units at the outer circumferential edge is that a sturdy and reliable drive assembly is achieved that operates even when a part of the drive rollers may be under maintenance or malfunctioning. This increases reliability and reduces downtime.

Another advantage is that, due to the decentral, circumferential positioning, the drive is positioned away from the cleaning activities performed on the vehicle support platform. This results in a reduced risk of pollution of the drive assembly due to the cleaning activities.

Yet another advantage is that, the decentral, circumferential positioning also ensures that the drive assembly is easily accessible to provide maintenance to the drive assembly.

The advantage of providing one or more motors, preferably electric motors, in conjunction with rollers, gears or wheels is that a reliable and simple drive assembly is realised. Naturally, the wheels and/or gears and/or rollers may be combined with a belt or chain drive mechanism to (even further) increase reliability and traction of the drive assembly.

In an embodiment according to the invention, the drive assembly comprises an annular drive plate having a central axis that is collinear with the central platform axis and that extends from a radially outer part of the base surface towards a ground surface and a plurality of drive units that are in direct contact with a first side surface of the drive plate of the vehicle support platform, wherein the drive units are preferably rollers, gears or wheels driven by one or more motors; and preferably a plurality of counterbalances, wherein each counterbalance is positioned across an associated drive unit against a second side surface that is opposite the first side surface for centering the vehicle support platform, wherein the counterbalance preferably is a roller, gear or wheel.

An advantage of providing a plurality of drive units at the outer circumferential edge is that a sturdy and reliable drive assembly is achieved that operates even when a part of the drive rollers may be under maintenance or malfunctioning. This increases reliability and reduces downtime.

Another advantage is that, due to the decentral, circumferential positioning underneath the vehicle support platform, the drive is positioned away from the cleaning activities performed on the vehicle support platform. This results in a reduced risk of pollution of the drive assembly due to the cleaning activities.

The advantage of providing one or more motors, preferably electric motors, in conjunction with rollers, gears or wheels is that a reliable and simple drive assembly is realised. Naturally, the wheels and/or gears and/or rollers may be combined with a belt or chain drive mechanism to (even further) increase reliability and traction of the drive assembly.

In an embodiment according to the invention, the drive assembly comprises a drive motor and a drive shaft that is connected thereto, wherein the drive shaft extends collinear with the central platform axis from the motor to a central point of the vehicle support platform.

An advantage of providing a centrally placed drive shaft is that it provides a simple, reliable and relatively cheap construction. Due to the central placement, only a single drive is required, which reduces costs.

Another advantage of this embodiment is that the drive assembly for rotating the vehicle support platform can be integrated with the ground support, therewith providing a single construction. This reduces investment costs and simplifies construction requirements.

In an embodiment according to the invention, wherein the vehicle support platform is substantially circular, preferably a substantially circular disc, or wherein the vehicle support platform is has a polygonal shape with N sides, wherein N preferably is 8, 10, 12, 14 or 16.

An advantage of a circular or polygonal shape, especially an octagonal, decagonal, dodecagonal, tetradecagonal or hexadegonal shape, is that the shape is especially suited to be rotated.

In an embodiment according to the invention, the vehicle support platform has a circular or N-polygonal shape and the platform comprises a number N of segments that are connected to each other to form the vehicle support platform, wherein preferably N is 8, 10, 12, 14 or 16.

An advantage is that a modular platform is achieved in which different segments can easily be replaced.

Another advantage of the circular or N-polygonal shape is that each segment may, when viewed in a radial direction of the vehicle support platform, be tilted or slated from the longitudinal axis towards a side of the segment. In other words, the segment may have a slight triangular form when viewed in (vertical) cross section, which allows water and/or cleaning fluids to flow towards the side edges of the segment. This improves fluid discharge from the vehicle surface and increases grip on the vehicle surface.

An even further advantage is that, especially in combination with a funnel-shaped indentation, a space underneath the vehicle support platform, is easily accessible to install, maintain and check on support structures, discharge ducts etcetera. It also allows for an easy collection of garbage, dust and/or waste (particles).

Yet another advantage of such a modular construction is that the vehicle support platform may be provided with different types of floor segments, such as for example closed segments or segments having openings, such as perforated steel plates and/or perforated plastic plates.

In an embodiment according to the invention, the modular plates may be provided on a supporting grid structure. This allows the plates to be even more easily exchanges based on the particular needs of the moment, such as for example weather, season etc.

In an embodiment according to the invention, the vehicle support platform is manufactured from metal, such as stainless steel or aluminium, plastic, such as reinforced plastic and/or structured plastic plates, or combinations thereof.

In an embodiment according to the invention, the vehicle support platform is provided with guiding and/or indication means, wherein the guiding and/or indication means are preferably chosen from one or more of: markings, marked positions, lights, such as stop/go-lights and sensors, such as park-sensors or distance sensors.

An advantage of providing guiding and/or indication means is that a customer is guided through the use and/or visiting of the installation according to the invention. To that end, the installation according to the invention for example may use stop/go lights to regulate entrance and/or exit or may provide markings or marked positions, such as lines, indicator lights or reflecting lines to mark vehicle parking positions on the vehicle support platform.

In an embodiment according to the invention, the number of cleaning devices is positioned along a circumference of the rotatable platform and/or is positioned at working distance above and/or aside the vehicle surface of the vehicle support platform.

The cleaning installation according to the invention provides the advantage that the cleaning devices can be positioned at different positions and in working distance of the vehicle support platform. The cleaning devices may for example be positioned above the vehicle support platform or may be positioned near an outer edge thereof. The cleaning devices may be configured to rotate along with the platform or may be configured to be stationary compared to the rotation of the vehicle support platform, wherein the choice for example depends on the type of device and/or the cleaning action to be taken therewith. A carpet cleaning device, such as carpet beater, may for example be positioned in a fixed (nonrotating) position near an entrance of the installation according to the invention. Similarly a perfume device to provide a perfume to the (interior of the) vehicle is preferably position stationary near an exit of the installation according to the invention. Other devices, such as vacuum cleaners, may for example be positioned near, at, on or above the platform surface and be configured to rotate along with the vehicle support platform. Depending on the type and function of the cleaning device, it will be positioned at, on, near or above the vehicle support platform and it will be either rotatable, that is rotating along with the rotation of the vehicle support platform, or non-rotatable, i.e. fixed vis-à-vis the rotation of the vehicle support platform.

It is preferred that the cleaning devices are positioned along a circumference of a circle that extends at a predetermined radius from the central platform axis. In other words, each of the number of cleaning devices is positioned at a distance (equal to the circle radius) from the central platform axis on or above the vehicle support platform.

An advantage thereof is that the cleaning devices are positioned near the vehicles without obstructing space required to position the vehicle on the vehicle support platform.

In an embodiment according to the invention, the vehicle support platform is provided with a client area and a working area that are substantially concentric when viewed from the central platform axis. The client area is central area having a predetermined radius (from the central axis radially outward), and the working area is positioned concentrically around the central area. Preferably, the cleaning devices are positioned near or at a joint in between the client area and the working area.

An advantage thereof is that the cleaning devices are positioned near the vehicles without obstructing space required to position the vehicle on the vehicle support platform.

In an embodiment according to the invention, the cleaning devices are interior cleaning devices, that preferably comprise retractable cleaning devices and/or comprise cleaning devices that have retractable parts that are configured to reach into a vehicle interior.

The cleaning devices according to the invention are interior cleaning devices (which are necessary for interior cleaning) and preferably have at least some retractable, extractable and/or flexible parts that allow an operator to reach into the vehicle interior with at least a part of the cleaning device. This may for example be a retractable and/or flexible hose of a vacuum cleaner, a retractable spray cleaner for interior cleaning of windows or other suitable interior cleaning devices.

In an embodiment according to the invention, the cleaning devices are suspended above the vehicle platform on a support frame and preferably are positioned such that the cleaning devices, in use, are positioned adjacent a vehicle of which the interior needs to be cleaned.

In an embodiment according to the invention, additionally comprising, an entrance area and an exit area, both of which are positioned adjacent the vehicle support platform, and wherein the entrance area and the exit area are located close to each other, and preferably at least partially overlap with each other.

An advantage of having an entrance and exit area that are positioned near each other and the circumference of the vehicle support platform is that the vehicles are transported over substantially a full revolution of the vehicle support platform during cleaning. This means that the floor surface required for the cleaning installation is reduced due to the fact that the entrance and exit are positioned near to or even overlapping with each other.

Another advantage is that a client, customer or driver of the vehicle can exit the vehicle upon entering thereof in the cleaning installation and can, after cleaning, enter the vehicle at substantially the same positioning. This allows the cleaning installation to be used even by disabled people and/or people having that have trouble walking or moving. As such, a wider range of consumers or customers can use the cleaning installation according to the invention.

Another advantage is that the installation with the rotating vehicle support platform is of interest to children (i.e. a happening for kids).

Yet another advantage is that, due to the rotation, it is easy to take personal belongings out of the vehicle and store/position them, without having to carry them to the end of the cleaning process on the vehicle support platform.

In an embodiment according to the invention, the number of vehicles that the vehicle support platform is configured to support is in the range of 2 - 14, preferably in the range of 4 - 10 and more preferably about 8.

The interior cleaning installation is preferably configured to support between 4 or 6 to about 10 vehicles at the same time. It has been found that having a larger or smaller number than the abovementioned ranges is less efficient. In case of a single car, the installation may as well be positioned on a traditional interior cleaning installation. To accommodate over 14 vehicles would require a vehicle support platform with a large outer circumference, which would lead to a larger central area that would be little or unused. It has been found that a capacity in the abovementioned ranges, and especially between 4 or 6 to 10 vehicles provides sufficient space for the cleaning devices and the people (car owners/drivers and/or passengers) and simultaneously does not incur a large amount of unused space.

Preferably, about 8 cars can be positioned in a circle on, preferably along or near the outer circumference, the vehicle platform.

In an embodiment according to the invention, the cleaning installation comprises a control unit and a number of sensors, wherein the number of sensors may at least comprise one or more of a rotation sensor that is configured to determine a rotation speed of the vehicle support platform and/or a detection sensor that is configured to detect a vehicle at or near an edge of the vehicle support platform, wherein the control unit is configured to increase and/or decrease a rotation speed based on sensor input from the number of sensors.

An advantage of a control unit and a number of sensors is that the rotation speed can be adapted in response to the sensor data. The number of sensors may for example be provided such that it allows detection of a vehicle that is entering onto the vehicle support platform and/or detection of a vehicle that has only partially entered onto the vehicle support platform. In the latter case, the control unit may subsequently reduce the rotation speed of the platform (even to zero rotation speed) to allow a driver or user to correct the situation and drive the vehicle completely onto the vehicle support platform.

In an embodiment according to the invention, comprising a housing that at least extends around the circumference of the vehicle support platform, and in some case, also at least partially around the entrance and/or exit area.

It is preferred that the cleaning installation according to the invention is provided in a housing or building. The building or housing may extend around the cleaning installation and/or at least partially around the entrance and/or exit area, such that the entrance and/or exit area extend through an opening in the housing or building to provide entrance and exit to the vehicles. The housing or building may comprise additional rooms, spaces and/or functions, such as control room, sanitation rooms, office rooms etcetera.

In an embodiment according to the invention, the vehicle support platform comprises a central shaft that extends collinear with the central platform axis and that is configured to center the vehicle support platform with regard to the central platform axis.

An advantage of a central shaft is that it allows the vehicle support platform to be (and to remain) centered in its location. This (further) reduces the risk of tilting and/or dislocation and/or wobbling of the vehicle support platform during use.

The invention also relates to a method for cleaning vehicles, such as cars, comprising the steps of:
- providing a rotary vehicle interior cleaning installation according to the invention;
- moving a vehicle onto the vehicle surface of the vehicle support platform;
- rotating the vehicle support platform along the number of cleaning stations and/or cleaning devices;
- cleaning the vehicle during the rotation of the vehicle support platform at the number of cleaning stations and/or cleaning devices; and
- moving the vehicle from the vehicle surface of the vehicle support platform after cleaning.

The method according to the invention has similar effects and advantages as the cleaning installation according to the invention. The method according to the invention may freely be combined with the embodiments as described above for the cleaning installation according to the invention.

An advantage of the method according to the invention is that it, due to its rotary nature, provides a consumer-friendly method of cleaning vehicles. Consumers can exit and enter the vehicle at substantially the same location, thus reducing the need to move along with the car.

Another advantage of the method according to the invention is that the cleaning of the vehicles is performed at a relatively small surface, especially compared to known cleaning methods.

In an embodiment of the method according to the invention, the step of moving the vehicle onto the vehicle surface of the vehicle support platform comprises moving the vehicle through the entrance area onto the vehicle surface; and wherein the step of moving the vehicle from the vehicle surface of the vehicle support platform comprises moving the vehicle through the exit area.

In an embodiment of the method according to the invention, the step of cleaning the vehicle comprises performing a single cleaning step at each of the number of cleaning stations and/or cleaning devices during each partial rotation of the vehicle support platform.

An advantage of performing a single cleaning step at each of the number of cleaning stations is that a conveyor style cleaning can be performed on multiple cars at the same time, while simultaneously requiring a limited surface to position the vehicles that are cleaned. By performing a single step at each cleaning station, a specialized, customizable cleaning method is achieved.

Further advantages, features and details of the invention are elucidated on the basis of preferred embodiments thereof, wherein reference is made to the accompanying drawings, in which:
Figure 1 shows a perspective view of an example of the cleaning installation according to the invention;
Figure 2 shows a cross-sectional view of an example of the cleaning installation according to the invention that includes a building;
Figure 3 shows a detailed view of an example of a part of a support assembly of the cleaning installation according to the invention;
Figure 4 shows a side view of the example of figure 3;
Figure 5 shows a detailed side view of a second example of a part of a support assembly according to the invention; and
Figure 6 shows a detailed side view of a third example of a part of a drive assembly according to the invention
Figure 7 shows a detailed side view of a fourth example of a part of a drive assembly according to the invention;
Figure 8 shows a cross-sectional view of a part of a support assembly that includes an example of a drive assembly according to the invention;
Figure 9 shows a cross-sectional view of a part of a support assembly that includes a second example of a drive assembly according to the invention;
Figure 10 shows two side views of an example of a ground support in the form of a roller according to the invention; and
Figure 11 is a detailed side view of a third drive assembly according to the invention.

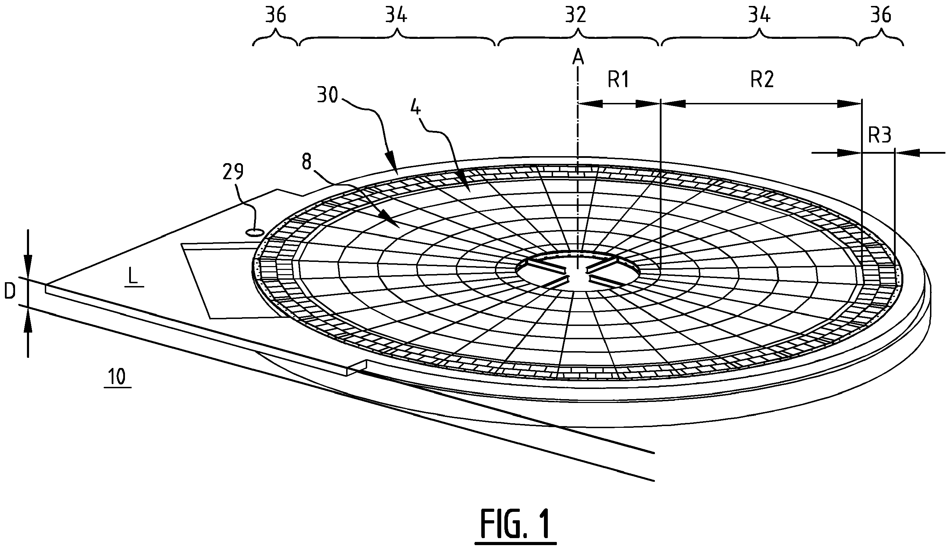

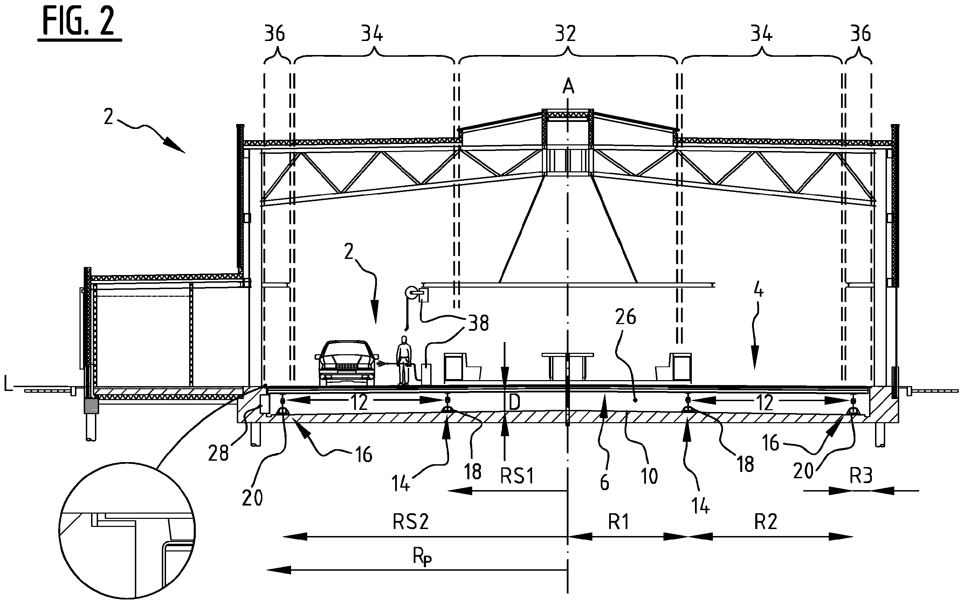

In an example of the cleaning installation 2 (see figures 1, 2), cleaning installation 2 comprises vehicle support platform 4, which has base surface 6 and vehicle surface 8. It is noted that base surface 6 is, when viewed in a vertical direction, positioned on a lower or underside of vehicle support platform 4, whereas vehicle surface 8 is positioned on an upper side of vehicle support platform 4. In this example, vehicle support platform 4 is circular with central support axis A around which vehicle support platform 4 is rotatable.

Vehicle support platform 4 is positioned at distance D above ground surface 10 and is supported by support assembly 12, which in this example comprises two supports sets 14, 16, each of which includes a plurality of ground supports 18, 20. Plurality of ground supports 16 of first support set 14 is positioned in first ring 22 having first ring radius RS1, whereas plurality of ground supports 18 of second support set 20 is positioned in second ring 24 having second ring radius RS2. By providing first support set 14 and second support set 16, an even more stable configuration is achieved due to the distribution of weight of vehicle support platform 4 over the radius Rₚ thereof.

In this particular example (shown in figures 1 and 2), vehicle support platform 4 is positioned in indentation 26 in the ground, which means that ground surface 10 is positioned lower than ground level L of the ground. This also means that vehicle surface 8 of vehicle support platform 4 is positioned substantially at even level with ground level L. Vehicle interior cleaning installation 2 is further provided with drive assembly 28, which in this example is positioned around outer circumferential edge 30 of vehicle support platform 4.

In this example, vehicle support platform 4 is, when viewed in a radially outward direction, divided in three sections. First section 32 comprises central section 32 at which for example customers, such as owners of the vehicles to be cleaned, can remain during the cleaning of their vehicle. Central section 32 may be provided with furniture and/or storage to accommodate the customers. Central section 32 as such is therefore an inner circle of vehicle support platform 4. One of main advantages of having central section 32 is that customers, during cleaning of their vehicle, can remain in central section 32 and can re-enter their vehicle after cleaning (which preferably is after a full rotation of vehicle support platform 4). Central section 32 extends from central support axis A radially outward over radius R1.

Cleaning section 34 extends from radius R1 radially outward to radius R2 over a predetermined length. Cleaning section 34 therewith forms a (circular) strip on which vehicles can be positioned during cleaning. Cleaning section 34 can be provided with a perforated floor, for example a perforated plastic floor, which allows waste, dust and other contaminants to fall through to the ground surface from which it can be removed. In a (not shown) example, vehicle surface 8 may be provided with segmented floor parts, which together form vehicle surface 8. Such segments preferably are removably provided, which allows them to be removed during for example cleaning.

Third section 36 of vehicle support platform 4 is edge section 36, which in this example extends from radius R2 radially outward towards radius R3, which is the edge of vehicle support platform 4. Edge section 36 may be provided for the placement of cleaning devices 38 or may be provided as working area in which drive assembly 28 may operate. In this particular example (see the enlarged view in figure 2), edge section 36 has a cut-out section, which results in part of vehicle support platform 4 projecting over an edge of indentation 10. In some examples and embodiments, second section 34 and third section 36 together form a single second section that extends from radius R1 to radius R3 (i.e. the edge of vehicle support platform 4). Essentially, vehicle support platform 4 may be provided with any number of sections, which are concentric with respect to central support axis A. In this example, drive assembly 28 is positioned at edge 30, which is the outer circumference of edge section 36.

Cleaning installation 2 is further provided with at least one sensor 29, which in this example is sensor 29 that is configured to detect misaligned vehicles on vehicle support platform 4. Sensor 29 may for example be detection sensor 29 that detects if a vehicle is not (completely) provided on vehicle support platform 4. In response, a rotation speed of vehicle support platform 4 may be reduced in order to reduce 'wringing' As a result, straining or torsion on the vehicle due to the rotation of vehicle support platform 4 can be prevented. A similar result may also be achieved if sensor 29 is rotation speed sensor 29 on vehicle support platform 4 or a combination of such (or other suitable) sensors is applied.

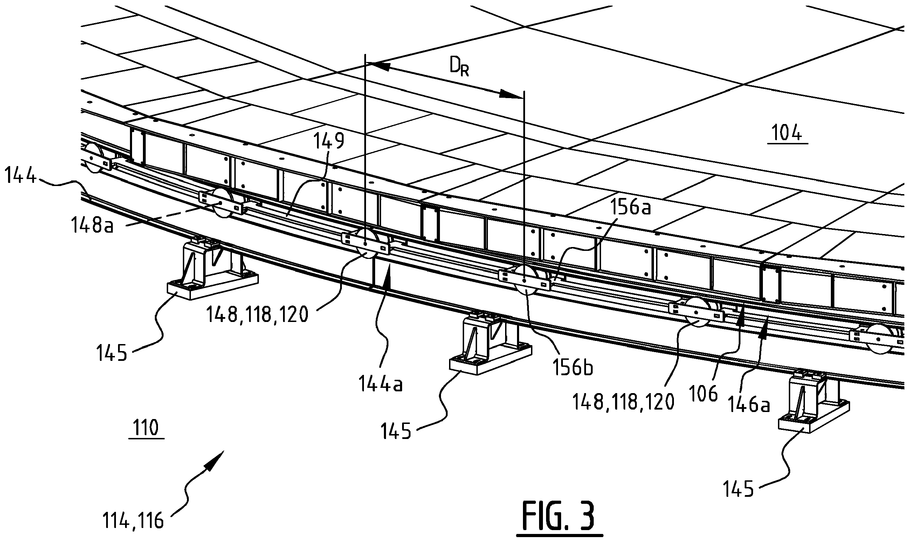

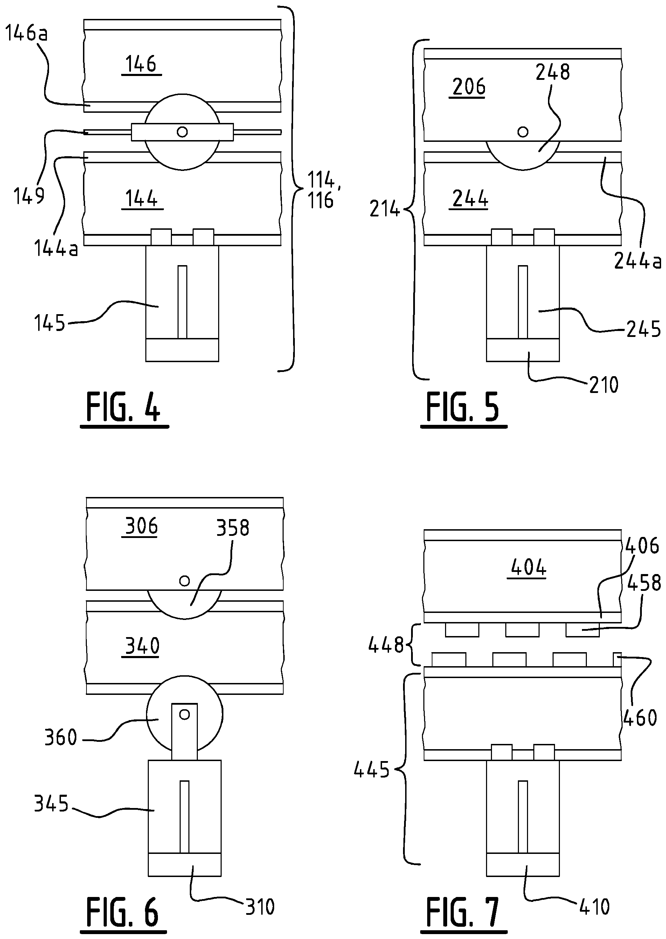

In a more detailed view of a first example of support set 114, 116 (see figures 3,4), support set 114, 116 comprises ground guide rail 144 that is connected to ground surface 110, in this example by means of guide rail supports 145, and platform guide rail 146 that is connected to base surface 106. The outer ends 144a, 146a of respective rails 144, 146 that face each other are T-shaped and, in use, are positioned at least partially inside rollers 148. More specifically, they are positioned within flanges 156a, 156b of rollers 148. As indicated, outer ends 144a, 146a face each other and are positioned across from each other. Both platform guide rail 146 and ground guide rail 144 extend in a circumferential direction with respect to central platform axis A. Support sets 114, 116 further comprise a plurality of ground supports 118, 120, with each ground support 118, 120 being formed as roller 148 that is positioned between ground guide rail 144 and platform guide rail 146. Each ground support 118, 120 is in rolling contact with both of these guide rails 144, 146 to allow vehicle support platform 104 to rotate around its central platform axis A. It is noted that roller 148, which in this example is manufactured from wear-resistant plastic, may be connected to either one of ground guide rail 144 or platform guide rail 146. The connection is such that central axis 148a of roller 148 extends collinear with a line that extends substantially radially outward from central platform axis A. Roller 148 may also be manufactured from metal or a combination of plastic and metal. Furthermore, rollers 148 are in this example separated by means of distance holders 149, which are positioned between rollers 148 to maintain the predetermined distance D_{R} between them.

In a more detailed view of a second example of support set 214 (see figure 5), support set 214 comprises single guide rail 244 that extends from ground surface 210 towards base surface 206 and the plurality of ground supports 248 are formed as a plurality of rollers 248 that are positioned on or, in this example, partially in base surface 206. Rollers 248 are positioned on ground guide rail 244 and allow vehicle support platform 204 to rotate around its central platform axis A. In this particular example, roller 248 has cylindrical main body 250 having central opening 252 that extends along longitudinal axis AX of cylindrical body 250. Each outer end 254a, 254b of main body 250 is be provided with a respective flange 256a, 256b. Each flange 256a, 256b extends perpendicular to axis AX and has flange radius FR that exceeds radius RX of cylindrical main body 250. This provides roller 248 with a I-shaped form that allows it to be positioned on top of ground guide rail 244. This positioning may also be reversed in that a platform guide rail is used in conjunction with roller 248 that is positioned on, or at least partially in, ground surface 210. An example of such reversed construction is shown in figure 5, with the exception that platform guide rail 246 has a U-shaped end that is positioned on top of roller 248 (and thus encloses roller 248).

In a third example (see figure 6), support sets 314, 316 comprise a plurality of ground supports 358, 360 in the form of a plurality of platform rollers 358 that are positioned at or at least partially in base surface 306 of vehicle support platform 304 and a plurality of ground rollers 360 that are positioned on or at least partially in ground surface 310. In this example, ground rollers 360 are positioned on supports 345, which are connected to ground surface 310. In addition, support sets 314, 316 comprise guide rail 340 which is positioned between ground rollers 360 and platform rollers 358 and is in rolling contact with both. Platform rollers 358 and ground rollers 360 may be similar to the rollers described with reference to figure 4. More specifically, platform rollers 358 and ground rollers 360 may thus be provided with a cylindrical main body 350 having central opening 352 that extends along longitudinal axis AX of cylindrical body 350. Each outer end 354a, 354b of main body 350 is be provided with a respective flange 356a, 356b. Each flange 356a, 356b extends perpendicular to axis AX and has flange radius FR that exceeds radius RX of cylindrical main body 350. This provides roller 348 with a I-shaped form that allows it to be positioned on top or underneath of guide rail 340. The flanges 356a, 356b partially enclose guide rail 340 to prevent radial movement. Alternatively, guide rail 340 may be an H-shaped beam in which rollers 358, 360 are positioned.

In a fourth example (see figure 7), ground supports 448 are formed as a plurality of magnetic platform supports 458 that are connected to base surface 406 of vehicle support platform 404 and a plurality of magnetic ground supports 460 that are connected to ground surface 410, which in this case is done via supports 445. Magnetic platform supports 458 are, when viewed in a vertical direction, positioned above magnetic ground supports 460 such that the magnetic supports 458, 460 cooperate to provide a support force to vehicle support platform 404.

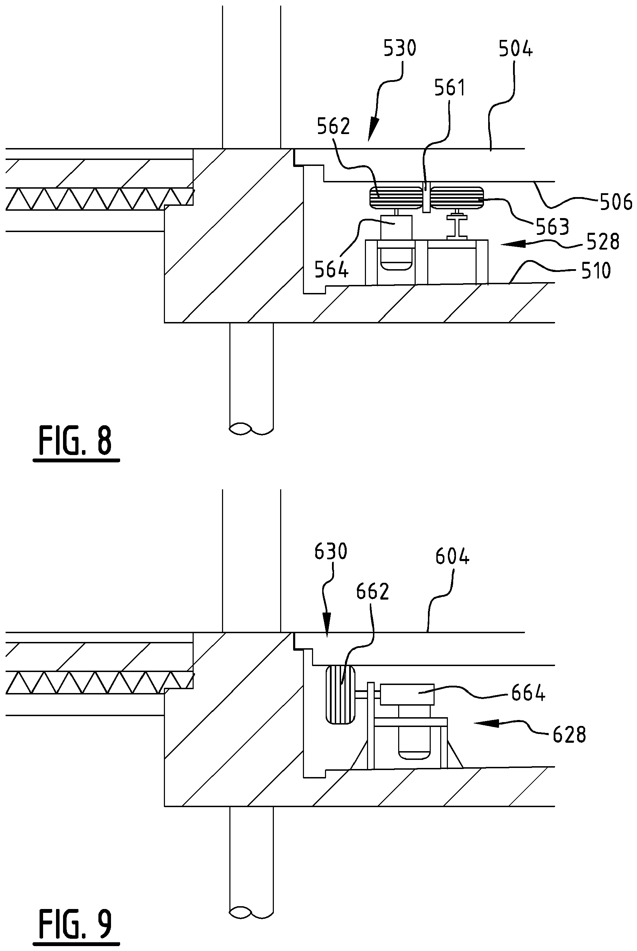

In an example of drive assembly 528 (see figure 8), drive assembly 528 comprises one (and preferably more) drive units 562 (see figure 8) that are positioned underneath base surface 506 of vehicle support platform 504. In this example, vehicle support platform 504 is provided with annular drive plate 561. Annular drive plate 561 has a central axis that is collinear with central platform axis A and extends from a radially outer part of base surface 506 towards a ground surface 510. Each drive unit 562 in this example comprises a drive roller, which may also be a drive gear or drive wheel. In this example, each drive unit 562 is driven by electric motor 564, which allows drive unit 562 to rotate vehicle support platform 504. Drive motor 564 is connected to roller 562. Roller 562 is in driving contact with a first side of annular drive plate 561 to drive rotation of vehicle support platform 504. In order to provide an even more stable drive mechanism, drive assembly 528 is further provided with counterbalance 563, which in this example is centering roller or wheel 563. Counterbalance 563 is in direct contact with a second side of annular drive plate 561, which is opposite the first side of annular drive plate 561 with which drive roller 562 is in contact.

In a second example of drive assembly 628 (figure 9), drive assembly 628 comprises one or more drive units 662 (see figure 9) that are positioned underneath and in direct contact with outer circumferential edge 630 of the vehicle support platform 604. Drive units 662 in this example are rollers, yet may also be gears or wheels. In this example, drive units 662 are driven by electric motor 664, which allows drive units 662 to rotate vehicle support platform 604.

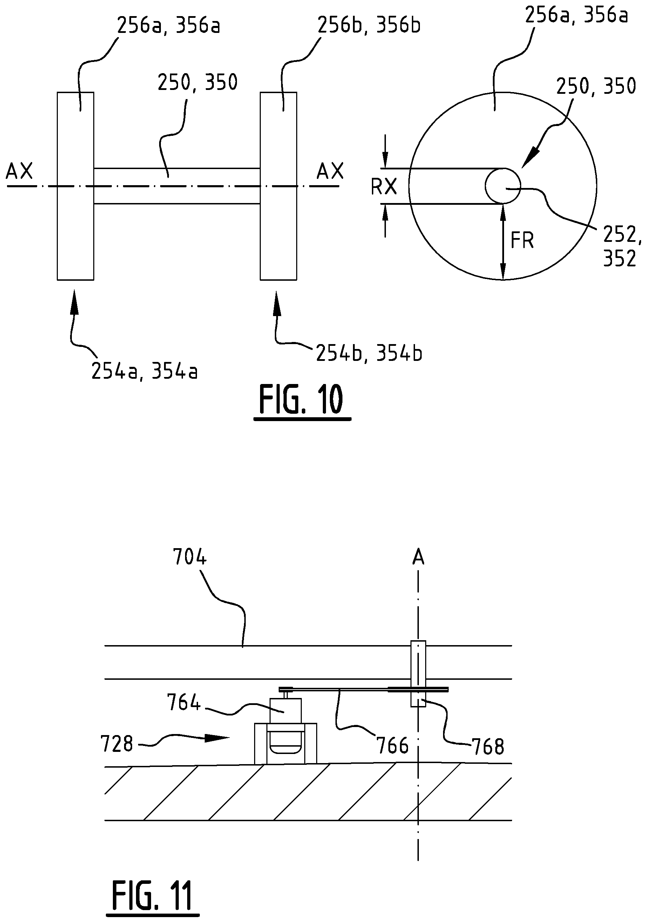

A more detailed view of an example of roller 348, 358, 360 is shown in figure 10. Platform rollers 358 and ground rollers 360, which both may be similar rollers 348, may thus be provided with a cylindrical main body 250, 350 having central opening 252, 352 that extends along longitudinal axis AX of cylindrical body 250, 350. Each outer end 254, 354a, 254b, 354b of main body 250, 350 is provided with a respective flange 256a, 356a, 254b, 356b. Each flange 256a, 356a, 256b, 356b extends perpendicular to axis AX and has flange radius FR that exceeds radius RX of cylindrical main body 250, 350. This provides roller 248, 348 with a I-shaped form that allows it to be positioned on top or underneath a guide rail. The flanges 256a, 356a, 256b, 356b may partially enclose a guide rail to prevent radial movement. Alternatively, a guide rail may be an H-shaped beam in which rollers 248, 348 are positioned.

In a third example drive assembly 8 is provided near central axis A of vehicle platform 704. Drive assembly 728 in this example comprises electric motor 764 and transmission 766, which in this case is belt or chain transmission 766, to provide rotation to central rod 768.

It is noted that different aspects of the different examples may freely be combined with each other as these examples would still fall within the scope of the claims.

The present invention is by no means limited to the above described preferred embodiments thereof. The rights sought are defined by the following claims within the scope of which many modifications can be envisaged.

## Claims

1. Rotary vehicle interior cleaning installation (2), the installation (2) comprising:
- a vehicle support platform (4) that is rotatable around a central platform axis (A) and is configured to support multiple vehicles on a vehicle surface (8) of the vehicle support platform (4);
- a drive assembly (28) that is operatively connected to the vehicle support platform (4) and that is configured to rotate the vehicle support platform (4); and
- a number of cleaning devices (38) that is positioned at a working distance from the vehicle surface (8) of the vehicle support platform (4), and
wherein the vehicles are, during use of the installation (2), positioned near an outer part of the vehicle support platform (4), whereas a central area of the vehicle support platform (4) is configured to accommodate people.

2. Rotary vehicle interior cleaning installation (2) according to claim 1, further comprising a support assembly (12) that is configured to, preferably rotatably, support the vehicle support platform (4) with respect to a ground surface (10).

3. Rotary vehicle interior cleaning installation (2) according to claim 2, wherein the support assembly (12) comprises at least one support set (14, 16, 114, 116, 214, 314, 316) including a plurality of ground supports (18, 20, 118, 120) that are positioned between a base surface (106, 206, 306, 406, 506) that is positioned opposite the vehicle surface (8) and the ground surface (10, 110, 210, 310, 410, 510), and optionally wherein the plurality of ground supports (118, 120) is positioned in a ring having a ring radius with a central axis that coincides with the central platform axis (A).

4. Rotary vehicle interior cleaning installation (2) according to claim 3, wherein the support assembly (12) comprises a first support set (14, 114) and a second support set (16, 116), wherein the plurality of ground supports (18, 118) of the first support set (14, 114) is positioned in a first ring having a first ring radius (RS1) and wherein the plurality of ground supports (20, 120) of the second support set (16, 116) is positioned in a second ring having a second ring radius (RS2).

5. Rotary vehicle interior cleaning installation (2) according to any one of the claims 3-4, wherein the ground supports (18, 20, 118, 120) comprise rollers (148) that are spatially separated along the circumference of the ring and that are fixated with respect to each other by a distance holder (149) that extends around substantially the entire ring.

6. Rotary vehicle interior cleaning installation (2) according to any one of the claims 3-5, wherein the support assembly (12) comprises:
- a platform guide rail (146) that is connected to the base surface (106); and
- a ground guide rail (144) that is connected to the ground surface (108);
wherein the rollers (148) are positioned between the platform guide rail (146) and the ground guide rail (144) and are in rolling contact with both the platform guide rail (146) and the ground guide rail (144), such that the platform (104) is rotatable along the circumferential direction of the ring, and wherein the rollers (148) preferably are designed such that radial movement of the rollers (148) is substantially obviated.

7. Rotary vehicle interior cleaning installation (2) according to any one of the claims 3-4, wherein each of the plurality of grounds supports (18, 20, 118, 120) comprises:
- a platform roller (358) that is connected to the base surface (306) of the vehicle support platform (304); and
- a ground roller (360) that is connected to the ground surface (310);
wherein the platform roller (358) is, when viewed in a vertical direction, is positioned directly above the associated ground roller (360) and is operatively connected to the associated ground roller (360), and
wherein the support assembly (12) further comprises a guide rail (340) that is positioned between the platform rollers (358) and the ground surface rollers (360) along which the rollers (358, 360) are rollable, and wherein the rollers (358, 360) preferably are designed such that radial movement of the rollers (358, 360) is substantially obviated, and optionally wherein the ground rollers (360) are spatially separated along the circumference of the ring and are fixated with respect to each other by a first distance holder and wherein the platform rollers (358) are spatially separated along the circumference of the ring and are fixated with respect to each other by a second distance holder.

8. Rotary vehicle interior cleaning installation (2) according to any one of the claims 3-4, wherein the plurality of ground supports comprise:
- magnetic platform supports (458), that are connected to the base surface (406) of the vehicle support platform (404); and
- magnetic ground supports (460) that are connected to the ground surface (410);
wherein the magnetic platform supports (458) are, when viewed in a vertical direction, positioned above the magnetic ground supports (460), such that the magnetic supports (458, 460) cooperate to provide a support force to the vehicle support platform (404).

9. Rotary vehicle interior cleaning installation (2) according to claim 2, wherein the ground support assembly (12) comprises a central support shaft that is connected to the platform support vehicle and that extends substantially coincidental with the central platform axis (A).

10. Rotary vehicle interior cleaning installation (2) according to any one of the preceding claims, wherein the drive assembly (528, 628, 728) comprises a plurality of drive units (562, 662, 762) that are positioned adjacent and in direct contact with an outer circumferential edge of the vehicle support platform (4), wherein the drive units (562, 662, 762) are preferably rollers, gears or wheels driven by one or more motors.

11. Rotary vehicle interior cleaning installation (2) according to any one of the claims 1-9, wherein the drive assembly (528) comprises:
- an annular drive plate (561) having a central axis that is collinear with the central platform axis (A) and that extends from a radially outer part of the base surface (506) towards a ground surface (510);
- a plurality of drive units (562) that are in direct contact with a first side surface of the drive plate (561) of the vehicle support platform (504), wherein the drive units (562) are preferably rollers, gears or wheels driven by one or more motors; and
- preferably a plurality of counterbalances (563), wherein each counterbalance (563) is positioned across an associated drive unit (562) against a second side surface that is opposite the first side surface for centering the vehicle support platform (504), wherein the counterbalance (563) preferably is a roller, gear or wheel.

12. Rotary vehicle interior cleaning installation (2) according to any one of the preceding claims, wherein the vehicle support platform (4) is substantially circular, preferably a substantially circular disc, or wherein the vehicle support platform (4) is has a polygonal shape and preferably is shaped as octagonal, decagonal, dodecagonal, tetradecagonal or hexadegonal; and/or
wherein the number of cleaning devices (38) is positioned along a circumference of the vehicle support platform (4) and/or is positioned at working distance above the vehicle surface (8) of the vehicle support platform (4); and/or
wherein the rotary vehicle cleaning installation comprises a housing that at least extends around the circumference of the vehicle support platform (4).

13. Rotary vehicle interior cleaning installation (2) according to any one of the preceding claims, additionally comprising:
- an entrance area that is positioned adjacent the vehicle support platform (4); and
- an exit area that is positioned adjacent the vehicle support platform (4);
wherein the entrance area and the exit area are located close to each other, and preferably at least partially overlap with each other; and, when dependent on claim 12, wherein the housing extends also at least partially around the entrance and/or exit area.

14. Method for cleaning vehicles, such as cars, comprising the steps of:
- providing a rotary vehicle cleaning installation (2, 102, 202, 302, 402) according to any one of the preceding claims;
- moving a vehicle onto the vehicle surface (8) of the vehicle support platform (4, 104, 204, 304, 404, 504, 604, 704);
- rotating the vehicle support platform (4, 104, 204, 304, 404, 504, 604, 704) along the number of cleaning stations and/or cleaning devices (38);
- cleaning the vehicle during the rotation of the vehicle support platform (4, 104, 204, 304, 404, 504, 604, 704) at the number of cleaning stations and/or cleaning devices (38); and
- moving the vehicle from the vehicle surface of the vehicle support platform (4, 104, 204, 304, 404, 504, 604, 704) after cleaning.

15. Method according to claim 14, wherein the step of moving the vehicle onto the vehicle surface of the vehicle support platform (4, 104, 204, 304, 404, 504, 604, 704) comprises moving the vehicle through the entrance area onto the vehicle surface; and wherein the step of moving the vehicle from the vehicle surface of the vehicle support platform (4, 104, 204, 304, 404, 504, 604, 704) comprises moving the vehicle through the exit area; and/or
wherein the step of cleaning the vehicle comprises performing a single cleaning step at each of the number of cleaning stations and/or cleaning devices (38) during each partial rotation of the vehicle support platform (4, 104, 204, 304, 404, 504, 604, 704).

## Patentansprüche

1. Drehende Fahrzeuginnenraumreinigungsanlage (2), die Anlage (2) umfassend:
- eine Fahrzeugträgerplattform (4), die um eine zentrale Plattformachse (A) drehbar ist und konfiguriert ist, um mehrere Fahrzeuge auf einer Fahrzeugoberfläche (8) der Fahrzeugträgerplattform (4) zu tragen;
- eine Antriebsanordnung (28), die mit der Fahrzeugträgerplattform (4) wirkverbunden ist und die konfiguriert ist, um die Fahrzeugträgerplattform (4) zu drehen; und
- eine Anzahl von Reinigungsvorrichtungen (38), die in einem Arbeitsabstand von der Fahrzeugoberfläche (8) der Fahrzeugträgerplattform (4) positioniert ist, und
wobei die Fahrzeuge, während einer Verwendung der Anlage (2), in der Nähe eines äußeren Teils der Fahrzeugträgerplattform (4) positioniert sind, wohingegen ein zentraler Bereich der Fahrzeugträgerplattform (4) konfiguriert ist, um Personen aufzunehmen.

2. Drehende Fahrzeuginnenraumreinigungsanlage (2) nach Anspruch 1, ferner umfassend eine Trägeranordnung (12), die konfiguriert ist, um die Fahrzeugträgerplattform (4) hinsichtlich einer Bodenoberfläche (10) vorzugsweise drehbar zu tragen.

3. Drehende Fahrzeuginnenraumreinigungsanlage (2) nach Anspruch 2, wobei die Trägeranordnung (12) mindestens einen Trägersatz (14, 16, 114, 116, 214, 314, 316) umfasst, der eine Vielzahl von Bodenträgern (18, 20, 118, 120) einschließt, die zwischen einer Basisoberfläche (106, 206, 306, 406, 506), die gegenüber der Fahrzeugoberfläche (8) positioniert ist, und der Bodenoberfläche (10, 110, 210, 310, 410, 510) positioniert sind, und optional wobei die Vielzahl von Bodenträgern (118, 120) in einem Ring positioniert ist, der einen Ringradius mit einer zentralen Achse aufweist, die mit der zentralen Plattformachse (A) zusammenfällt.

4. Drehende Fahrzeuginnenraumreinigungsanlage (2) nach Anspruch 3, wobei die Trägeranordnung (12) einen ersten Trägersatz (14, 114) und einen zweiten Trägersatz (16, 116) umfasst, wobei die Vielzahl von Bodenträgern (18, 118) des ersten Trägersatzes (14, 114) in einem ersten Ring positioniert ist, der einen ersten Ringradius (RS1) aufweist, und wobei die Vielzahl von Bodenträgern (20, 120) des zweiten Trägersatzes (16, 116) in einem zweiten Ring positioniert ist, der einen zweiten Ringradius (RS2) aufweist.

5. Drehende Fahrzeuginnenraumreinigungsanlage (2) nach einem der Ansprüche 3 bis 4, wobei die Bodenträger (18, 20, 118, 120) Rollen (148) umfassen, die entlang des Umfangs des Rings räumlich getrennt sind und die durch einen Abstandshalter (149) hinsichtlich zueinander fixiert sind, der sich im Wesentlichen um den gesamten Ring erstreckt.

6. Drehende Fahrzeuginnenraumreinigungsanlage (2) nach einem der Ansprüche 3 bis 5, wobei die Trägeranordnung (12) umfasst:
- eine Plattformführungsschiene (146), die mit der Basisoberfläche (106) verbunden ist; und
- eine Bodenführungsschiene (144), die mit der Bodenoberfläche (108) verbunden ist;
wobei die Rollen (148) zwischen der Plattformführungsschiene (146) und der Bodenführungsschiene (144) positioniert sind und in Rollkontakt sowohl mit der Plattformführungsschiene (146) als auch mit der Bodenführungsschiene (144) derart sind, dass die Plattform (104) entlang der Umfangsrichtung des Rings drehbar ist, und wobei die Rollen (148) vorzugsweise derart aufgebaut sind, dass eine radiale Bewegung der Rollen (148) im Wesentlichen vermieden wird.

7. Drehende Fahrzeuginnenraumreinigungsanlage (2) nach einem der Ansprüche 3 bis 4, wobei jeder der Vielzahl von Bodenträgern (18, 20, 118, 120) umfasst:
- eine Plattformrolle (358), die mit der Basisoberfläche (306) der Fahrzeugträgerplattform (304) verbunden ist; und
- eine Bodenrolle (360), die mit der Bodenoberfläche (310) verbunden ist;
wobei die Plattformrolle (358), wenn sie in einer vertikalen Richtung betrachtet wird, über der zugehörigen Bodenrolle (360) direkt positioniert ist und mit der zugehörigen Bodenrolle (360) wirkverbunden ist, und
wobei die Trägeranordnung (12) ferner eine Führungsschiene (340) umfasst, die zwischen den Plattformrollen (358) und den Bodenrollen (360) positioniert ist, entlang der die Rollen (358, 360) rollbar sind, und wobei die Rollen (358, 360) vorzugsweise derart aufgebaut sind, dass die radiale Bewegung der Rollen (358, 360) im Wesentlichen vermieden wird, und optional wobei die Bodenrollen (360) entlang des Umfangs des Rings räumlich getrennt sind und durch einen ersten Abstandshalter hinsichtlich zueinander fixiert sind, und wobei die Plattformrollen (358) entlang des Umfangs des Rings räumlich getrennt sind und durch einen zweiten Abstandshalter hinsichtlich zueinander fixiert sind.

8. Drehende Fahrzeuginnenraumreinigungsanlage (2) nach einem der Ansprüche 3 bis 4, wobei die Vielzahl von Bodenträgern umfassen:
- magnetische Plattformträger (458), die mit der Basisoberfläche (406) der Fahrzeugträgerplattform (404) verbunden sind; und
- magnetische Bodenträger (460), die mit der Bodenoberfläche (410) verbunden sind;
wobei die magnetischen Plattformträger (458), wenn sie in einer vertikalen Richtung betrachtet werden, über den magnetischen Bodenträgern (460) derart positioniert sind, dass die magnetischen Träger (458, 460) zusammenwirken, um eine Tragkraft für die Fahrzeugträgerplattform (404) bereitzustellen.

9. Drehende Fahrzeuginnenraumreinigungsanlage (2) nach Anspruch 2, wobei die Bodenträgeranordnung (12) eine zentrale Trägerwelle umfasst, die mit dem Plattformträgerfahrzeug verbunden ist und sich im Wesentlichen mit der zentralen Plattformachse (A) zusammenfallend erstreckt.

10. Drehende Fahrzeuginnenraumreinigungsanlage (2) nach einem der vorstehenden Ansprüche, wobei die Antriebsanordnung (528, 628, 728) eine Vielzahl von Antriebseinheiten (562, 662, 762) umfasst, die angrenzend an und in direktem Kontakt mit einer äußeren Umfangskante der Fahrzeugträgerplattform (4) positioniert sind, wobei die Antriebseinheiten (562, 662, 762) vorzugsweise Rollen, Zahnräder oder Räder sind, die durch einen oder mehrere Motoren angetrieben werden.

11. Drehende Fahrzeuginnenraumreinigungsanlage (2) nach einem der Ansprüche 1 bis 9, wobei die Antriebsanordnung (528) umfasst:
- ein ringförmiges Antriebsblech (561), das eine zentrale Achse aufweist, die mit der zentralen Plattformachse (A) kollinear ist und die sich von einem radial äußeren Teil der Basisoberfläche (506) zu einer Bodenoberfläche (510) erstreckt;
- eine Vielzahl von Antriebseinheiten (562), die in direktem Kontakt mit einer ersten Seitenoberfläche des Antriebsblechs (561) der Fahrzeugträgerplattform (504) sind, wobei die Antriebseinheiten (562) vorzugsweise Rollen, Zahnräder oder Räder sind, die durch einen oder mehrere Motoren angetrieben werden; und
- vorzugsweise eine Vielzahl von Gegengewichten (563), wobei jedes Gegengewicht (563) über eine zugehörige Antriebseinheit hinweg (562) an einer zweiten Seitenoberfläche positioniert ist, die der ersten Seitenoberfläche zum Zentrieren der Fahrzeugträgerplattform (504) gegenüberliegt, wobei das Gegengewicht (563) vorzugsweise eine Rolle, ein Zahnrad oder ein Rad ist.

12. Drehende Fahrzeuginnenraumreinigungsanlage (2) nach einem der vorstehenden Ansprüche, wobei die Fahrzeugträgerplattform (4) im Wesentlichen kreisförmig, vorzugsweise eine im Wesentlichen kreisförmige Scheibe ist, oder wobei die Fahrzeugträgerplattform (4) eine polygonale Form aufweist und vorzugsweise achteckig, zehneckig, zwölfeckig, vierzehneckig oder sechseckig geformt ist; und/oder
wobei die Anzahl von Reinigungsvorrichtungen (38) entlang eines Umfangs der Fahrzeugträgerplattform (4) positioniert ist und/oder in Arbeitsabstand über der Fahrzeugoberfläche (8) der Fahrzeugträgerplattform (4) positioniert ist; und/oder
wobei die drehende Fahrzeugreinigungsanlage ein Gehäuse umfasst, das sich mindestens um den Umfang der Fahrzeugträgerplattform (4) erstreckt.

13. Drehende Fahrzeuginnenraumreinigungsanlage (2) nach einem der vorstehenden Ansprüche, zusätzlich umfassend:
- einen Einfahrtsbereich, der angrenzend an die Fahrzeugträgerplattform (4) positioniert ist; und
- einen Ausfahrtsbereich, der angrenzend an die Fahrzeugträgerplattform (4) positioniert ist;
wobei sich der Einfahrtsbereich und der Ausfahrtsbereich nahe beieinander befinden und vorzugsweise mindestens teilweise einander überlappen; und, wenn abhängig von Anspruch 12, wobei sich das Gehäuse ebenso mindestens teilweise um den Einfahrts- und/oder Ausfahrtsbereich erstreckt.

14. Verfahren zum Reinigen von Fahrzeugen, wie etwa Autos, umfassend die Schritte:
- Bereitstellen einer drehenden Fahrzeugreinigungsanlage (2, 102, 202, 302, 402) nach einem der vorstehenden Ansprüche;
- Bewegen eines Fahrzeugs auf die Fahrzeugoberfläche (8) der Fahrzeugträgerplattform (4, 104, 204, 304, 404, 504, 604, 704);
- Drehen der Fahrzeugträgerplattform (4, 104, 204, 304, 404, 504, 604, 704) entlang der Anzahl von Reinigungsstationen und/oder Reinigungsvorrichtungen (38);
- Reinigen des Fahrzeugs während der Drehung der Fahrzeugträgerplattform (4, 104, 204, 304, 404, 504, 604, 704) an der Anzahl von Reinigungsstationen und/oder Reinigungsvorrichtungen (38); und
- Bewegen des Fahrzeugs von der Fahrzeugoberfläche der Fahrzeugträgerplattform (4, 104, 204, 304, 404, 504, 604, 704) nach der Reinigung.

15. Verfahren nach Anspruch 14, wobei der Schritt des Bewegens des Fahrzeugs auf die Fahrzeugoberfläche der Fahrzeugträgerplattform (4, 104, 204, 304, 404, 504, 604, 704) das Bewegen des Fahrzeugs durch den Einfahrtsbereich auf die Fahrzeugoberfläche umfasst; und wobei der Schritt des Bewegens des Fahrzeugs von der Fahrzeugoberfläche der Fahrzeugträgerplattform (4, 104, 204, 304, 404, 504, 604, 704) das Bewegen des Fahrzeugs durch den Ausfahrtsbereich umfasst; und/oder
wobei der Schritt des Reinigens des Fahrzeugs ein Durchführen eines einzelnen Reinigungsschritts an jeder der Anzahl von Reinigungsstationen und/oder Reinigungsvorrichtungen (38) während jeder Teildrehung der Fahrzeugträgerplattform (4, 104, 204, 304, 404, 504, 604, 704) umfasst.

## Revendications

1. Installation (2) rotative de nettoyage intérieur de véhicules, l'installation (2) comprenant :
- une plate-forme de support de véhicules (4) qui est rotative autour d'un axe de plate-forme central (A) et conçue pour supporter plusieurs véhicules sur une surface pour véhicules (8) de la plate-forme de support de véhicules (4) ;
- un ensemble d'entraînement (28) qui est relié de manière opérationnelle à la plate-forme de support de véhicules (4) et qui est conçu pour faire tourner la plate-forme de support de véhicules (4) ; et
- un certain nombre de dispositifs de nettoyage (38) qui sont positionnés à une distance de travail de la surface pour véhicules (8) de la plate-forme de support de véhicules (4), et
dans laquelle les véhicules sont, pendant l'utilisation de l'installation (2), positionnés près d'une partie extérieure de la plate-forme de support de véhicules (4), tandis qu'une zone centrale de la plate-forme de support de véhicules (4) est configurée pour accueillir des personnes.

2. Installation (2) rotative de nettoyage intérieur de véhicules selon la revendication 1, comprenant en outre un ensemble de support (12) conçu pour soutenir, de préférence de manière rotative, la plate-forme de support de véhicules (4) par rapport à une surface de sol (10).

3. Installation (2) rotative de nettoyage intérieur de véhicules selon la revendication 2, dans laquelle l'ensemble de support (12) comprend au moins un jeu de support (14, 16, 114, 116, 214, 314, 316) comprenant une pluralité de supports de sol (18, 20, 118, 120) qui sont positionnés entre une surface de base (106, 206, 306, 406, 506) qui est positionnée à l'opposé de la surface pour véhicules (8) et de la surface de sol (10, 110, 210, 310, 410, 510), et éventuellement dans laquelle la pluralité de supports de sol (118, 120) est positionnée dans un anneau ayant un rayon d'anneau avec un axe central qui coïncide avec l'axe de plate-forme central (A).

4. Installation (2) rotative de nettoyage intérieur de véhicules selon la revendication 3, dans laquelle l'ensemble de support (12) comprend un premier jeu de support (14, 114) et un second jeu de support (16, 116), la pluralité de supports de sol (18, 118) du premier jeu de support (14, 114) étant positionnée dans un premier anneau ayant un premier rayon d'anneau (RS1) et la pluralité de supports de sol (20, 120) du second jeu de support (16, 116) étant positionnée dans un second anneau ayant un second rayon d'anneau (RS2).

5. Installation (2) rotative de nettoyage intérieur de véhicules selon l'une quelconque des revendications 3 à 4, dans laquelle les supports de sol (18, 20, 118, 120) comprennent des rouleaux (148) qui sont séparés dans l'espace le long de la circonférence de l'anneau et qui sont fixés les uns par rapport aux autres par un élément de maintien de distance (149) qui s'étend sensiblement autour de la totalité de l'anneau.

6. Installation (2) rotative de nettoyage intérieur de véhicules selon l'une quelconque des revendications 3 à 5, dans laquelle l'ensemble de support (12) comprend :
- un rail de guidage de plate-forme (146) relié à la surface de base (106) ; et
- un rail de guidage de sol (144) relié à la surface de sol (108) ;
dans laquelle les rouleaux (148) sont positionnés entre le rail de guidage de plate-forme (146) et le rail de guidage au sol (144) et sont en contact roulant avec à la fois le rail de guidage de plate-forme (146) et le rail de guidage de sol (144), de sorte que la plate-forme (104) est rotative le long de la direction circonférentielle de l'anneau, et dans laquelle les rouleaux (148) sont de préférence conçus de sorte que le mouvement radial des rouleaux (148) est sensiblement évité.

7. Installation (2) rotative de nettoyage intérieur de véhicules selon l'une quelconque des revendications 3 à 4, dans laquelle chacun des supports de sol (18, 20, 118, 120) comprend :
- un rouleau (358) de plate-forme relié à la surface de base (306) de la plate-forme de support de véhicules (304) ; et
- un rouleau (360) de sol relié à la surface de sol (310) ;
dans laquelle le rouleau (358) de plate-forme, vu dans une direction verticale, est positionné directement au-dessus du rouleau (360) de sol associé et est relié de manière opérationnelle au rouleau (360) de sol associé, et
dans laquelle l'ensemble de support (12) comprend en outre un rail de guidage (340) qui est positionné entre les rouleaux (358) de plate-forme et les rouleaux (360) de surface de sol le long desquels les rouleaux (358, 360) peuvent rouler, et dans laquelle les rouleaux (358, 360) sont de préférence conçus de telle sorte que le mouvement radial des rouleaux (358, 360) est sensiblement évité, et éventuellement, dans laquelle les rouleaux (360) de sol sont séparés dans l'espace le long de la circonférence de l'anneau et sont fixés les uns par rapport aux autres par un premier élément de maintien de distance et dans laquelle les rouleaux (358) de plate-forme sont séparés dans l'espace le long de la circonférence de l'anneau et sont fixés les uns par rapport aux autres par un second élément de maintien de distance.

8. Installation (2) rotative de nettoyage intérieur de véhicules selon l'une quelconque des revendications 3 et 4, dans laquelle la pluralité de supports de sol comprend :
- des supports de plate-forme magnétique (458), qui sont reliés à la surface de base (406) de la plate-forme de support de véhicules (404) ; et
- des supports de sol magnétiques (460) qui sont reliés à la surface de sol (410) ;
dans laquelle les supports de plate-forme magnétiques (458) sont, vus dans une direction verticale, positionnés au-dessus des supports de sol magnétiques (460), de sorte que les supports magnétiques (458, 460) coopèrent pour fournir une force de support à la plate-forme de support de véhicules (404).

9. Installation (2) rotative de nettoyage intérieur de véhicules selon la revendication 2, dans laquelle l'ensemble de support (12) de sol comprend un arbre de support central qui est relié au véhicule de support de plate-forme et qui s'étend sensiblement en coïncidence avec l'axe central de plate-forme (A).

10. Installation (2) rotative de nettoyage intérieur de véhicule selon l'une quelconque des revendications précédentes, dans laquelle l'ensemble d'entraînement (528, 628, 728) comprend une pluralité d'unités d'entraînement (562, 662, 762) qui sont positionnées adjacentes et en contact direct avec un bord circonférentiel extérieur de la plate-forme de support de véhicules (4), dans laquelle les unités d'entraînement (562, 662, 762) sont de préférence des rouleaux, des roues dentées ou des roues entraînés par un ou plusieurs moteurs.

11. Installation (2) rotative de nettoyage intérieur de véhicules selon l'une quelconque des revendications 1 à 9, dans laquelle l'ensemble d'entraînement (528) comprend :
- une plaque d'entraînement annulaire (561) ayant un axe central colinéaire à l'axe de plate-forme central (A) et qui s'étend depuis une partie radialement extérieure de la surface de base (506) vers une surface de sol (510) ;
- une pluralité d'unités d'entraînement (562) qui sont en contact direct avec une première surface latérale de la plaque d'entraînement (561) de la plate-forme de support de véhicules (504), les unités d'entraînement (562) étant de préférence des rouleaux, des roues dentées ou des roues entraînés par un ou plusieurs moteurs ; et
- de préférence une pluralité de contrepoids (563), où chaque contrepoids (563) est positionné sur une unité d'entraînement (562) associée contre une seconde surface latérale opposée à la première surface latérale pour centrer la plate-forme de support de véhicules (504), le contrepoids (563) étant de préférence un rouleau, une roue dentée ou une roue.

12. Installation (2) rotative de nettoyage intérieur de véhicules selon l'une quelconque des revendications précédentes, dans laquelle la plate-forme de support de véhicules (4) est sensiblement circulaire, de préférence un disque sensiblement circulaire, ou dans laquelle la plate-forme de support de véhicules (4) a une forme polygonale et est de préférence de forme octogonale, décagonale, dodécagonale, tétradécagonale ou hexadécagonale ; et/ou
dans laquelle le nombre de dispositifs de nettoyage (38) est positionné le long d'une circonférence de la plate-forme de support de véhicules (4) et/ou est positionné à une distance de travail au-dessus de la surface pour véhicules (8) de la plate-forme de support de véhicules (4) ; et/ou
dans laquelle l'installation rotative de nettoyage de véhicules comprend un boîtier qui s'étend au moins autour de la circonférence de la plate-forme de support de véhicules (4).

13. Installation (2) rotative de nettoyage intérieur de véhicules selon l'une quelconque des revendications précédentes, comprenant en outre :
- une zone d'entrée qui est positionnée adjacente à la plate-forme de support de véhicules (4) ; et
- une zone de sortie qui est positionnée adjacente à la plate-forme de support de véhicules (4) ;
dans laquelle la zone d'entrée et la zone de sortie sont situées à proximité l'une de l'autre et, de préférence, se chevauchent au moins partiellement ; et, selon la revendication 12, dans laquelle le boîtier s'étend également au moins partiellement autour de la zone d'entrée et/ou de sortie.

14. Procédé de nettoyage de véhicules, tels que des voitures, comprenant les étapes consistant à :
- fournir une installation rotative de nettoyage de véhicules (2, 102, 202, 302, 402) selon l'une quelconque des revendications précédentes ;
- déplacer un véhicule sur la surface pour véhicules (8) de la plate-forme de support de véhicules (4, 104, 204, 304, 404, 504, 604, 704) ;
- faire tourner la plate-forme de support de véhicules (4, 104, 204, 304, 404, 504, 604, 704) le long du nombre de stations de nettoyage et/ou de dispositifs de nettoyage (38) ;
- nettoyer le véhicule pendant la rotation de la plate-forme de support de véhicules (4, 104, 204, 304, 404, 504, 604, 704) au nombre de stations de nettoyage et/ou de dispositifs de nettoyage (38) ; et
- déplacer le véhicule de la surface de plate-forme de support de véhicules (4, 104, 204, 304, 404, 504, 604, 704) après le nettoyage.

15. Procédé selon la revendication 14, dans lequel l'étape consistant à déplacer le véhicule sur la surface pour véhicules de la plate-forme de support de véhicules (4, 104, 204, 304, 404, 504, 604, 704) comprend le déplacement du véhicule à travers la zone d'entrée sur la surface pour véhicules ; et dans lequel l'étape consistant à déplacer le véhicule depuis la surface de la plate-forme de support de véhicules (4, 104, 204, 304, 404, 504, 604, 704) comprend le déplacement du véhicule à travers la zone de sortie ; et/ou
dans lequel l'étape de nettoyage du véhicule comprend la réalisation d'une seule étape de nettoyage à chacune des stations de nettoyage et/ou chacun des dispositifs de nettoyage (38) lors de chaque rotation partielle de la plate-forme de support de véhicules (4, 104, 204, 304, 404, 504, 604, 704).
